# EUROPÄISCHE PATENTSCHRIFT

(11) **EP 2 070 731 B1**
(45) Veröffentlichungstag und Bekanntmachung des Hinweises auf die Patenterteilung: **29.09.2010**
(21) Anmeldenummer: 08166061.5
(22) Anmeldetag: 08.10.2008
(51) Int. Cl.: B60C 11/12

(54) **Fahrzeugluftreifen**
Pneumatic tyres for a vehicle
Pneus de véhicule

(30) Priorität: 08.12.2007 DE 102007059291
(43) Veröffentlichungstag der Anmeldung: 17.06.2009
(73) Patentinhaber: Continental Reifen Deutschland GmbH, 30165 Hannover (DE)
(72) Erfinder: Diensthuber, Franz, 30559 Hannover (DE); Seng, Matthias, 30449 Hannover (DE); Vennebörger, Martin, 30625 Hannover (DE)
(74) Vertreter: Finger, Karsten

(56) Entgegenhaltungen:
- EP-A- 0 125 437
- EP-A- 1 669 218
- EP-A- 1 782 970
- EP-A- 1 859 962
- WO-A-94/21478
- WO-A-96/01190
- DE-A1- 10 214 913
- JP-A- 2000 006 619
- US-A1- 2006 016 533

## Beschreibung

Die Erfindung betrifft einen Fahrzeugluftreifen mit einem Laufstreifen, welcher sich aus Profilelementen, wie Profilblöcken oder Profilrippen, zusammensetzt, welche jeweils mit zumindest einem Einschnitt versehen sind, welcher sich in radialer Richtung ins Profilelementinnere erstreckt, und welcher Einschnittwände mit korrespondierenden Abschnitten mit einer Wellenform aufweist.

Ein Fahrzeugluftreifen mit einem derart ausgeführten Laufstreifen ist beispielsweise aus der EP-B-0 125 437 bekannt. Die Profilblöcke sind mit gewellten oder im Zick-Zack verlaufenden Einschnitten versehen, deren Wellenlänge und Amplitude klein sind im Vergleich zu den Abmessungen der Blöcke. Die Einschnitte weisen an ihrem Grund kleinere Amplituden auf als an der Laufstreifenoberfläche, wobei die Amplituden am Grund der Einschnitte bis zu Null verringert sein können. Die Einschnitte können ferner derart ausgeführt sein, dass, ausgehend von der Peripherie des Laufstreifens, ihre Amplitude bis in eine gewisse Tiefe konstant ist und dann bis zur maximalen Tiefe der Einschnitte abnimmt. Die Einschnitte sollen eine geringere Rissanfälligkeit am Einschnittgrund aufweisen als Einschnitte, die über ihre gesamte radiale Erstreckung mit einer gleichbleibenden Zick-Zack- oder Wellenform versehen sind.

Aus der EP-A2-1 669 218 ist ein Fahrzeugluftreifen mit einem Laufstreifen mit Profilelementen mit Einschnitten bekannt, die eine Zick-Zack-Konfiguration aufweisen. In radialer Richtung ändert sich die Zick-Zack-Form derart, dass sich Scheitel des Zick-Zack mit zunehmender Tiefe als Wellenform in radialer Richtung erstrecken bzw. fortsetzen und andere Scheitel des Zick-Zack sich geradlinig in radialer Richtung erstrecken oder sich entlang von Linien erstrecken, die eine Wellenform mit einer geringeren Amplitude aufweisen als die Wellenform der erstgenannten Scheitel. Die derart ausgeführten Einschnitte sollen das Profilelement durch Abstützmöglichkeiten zwischen den Einschnittwänden gut versteifen, jedoch ein Entformen der Lamellenbleche, die die Einschnitte herstellen, auf leichte Weise ermöglichen.

Da sich während der Benützung eines Reifens über dessen Haltbarkeitsdauer die Profiltiefe im Laufstreifen deutlich verringert, ist eine Änderung der Profilsteifigkeit, insbesondere der Steifigkeit der einzelnen Profilelemente, unumgänglich. Bei den üblichen Einschnittausführungen folgt die Änderung der Profilelementsteifigkeit einer eher streng monotonen Funktion. Am geringsten ist die Steifigkeit in Profilelementen mit gerade ausgeführten Einschnitten. In diesem Fall kann die Profilsteifigkeit durch geringere Einschnitttiefen erhöht werden. Bei Einschnitten, die im Wesentlichen einer Wellenform folgen, wird die Profilelementsteifigkeit eher wenig, bei sogenannten 3D-Einschnitten stark erhöht. Die bekannten Maßnahmen führen jedoch lediglich zu einer Verschiebung des Steifigkeitsminimums auf ein höheres Niveau. Derartige Winterreifen zeigen daher ein deutliches Nachlassen der Winterperformance mit zunehmendem Abrieb.

Der Erfindung liegt die Aufgabe zu Grunde, die Performance eines insbesondere für einen Wintereinsatz vorgesehenen Reifens zu verbessern, insbesondere sollen die Eigenschaften des Reifens auf Schnee, auf trockenen Fahrbahnen und auf Nässe möglichst ausgewogen und gleichermaßen gut sein.

Gelöst wird die gestellte Aufgabe erfindungsgemäß dadurch, dass der Einschnitt, von der Laufstreifenperipherie aus betrachtet, einen ersten Einschnittabschnitt aufweist, in welchem die bereits an der Laufstreifenperipherie gegebene Wellenform beibehalten ist, welcher jedoch unter einem spitzen Winkel zur radialen Richtung geneigt verläuft, wobei an diesen Abschnitt über einen in axialer Richtung verlaufenden Knickbereich ein zweiter Einschnittabschnitt anschließt, in welchem die Amplitude der Wellenform in radialer Richtung kontinuierlich geringer wird und am radialen inneren Ende des Abschnittes auf Null verringert ist, welcher Abschnitt gegenüber der radialen Richtung gegensinnig zum ersten Abschnitt unter einem spitzen Winkel geneigt verläuft, wobei an diesen Abschnitt über einen weiteren in axialer Richtung verlaufenden Knickbereich ein Endabschnitt anschließt, welcher sich in radialer Richtung erstreckt und unstrukturiert ausgeführt ist.

Derart ausgeführte Einschnitte in Profilelementen von Laufstreifen in Winterreifen beeinflussen die Steifigkeit der Profilelemente und damit des Laufstreifens je nach Abriebszustand auf unterschiedliche Weise. Bei neuen Reifen bewirkt vor allem der Knickbereich zwischen dem ersten und dem zweiten Einschnittabschnitt eine optimale Versteifung, der Laufsreifen ist ähnlich steif als hätte er übliche 3D-Einschnitte. Ist der Laufstreifen bis unter den ersten Knickbereich abgerieben, weist der Laufstreifen ein weicheres Verhalten auf, welches auf die Wellenform des zweiten Abschnittes zurückzuführen ist. Kurz vor Erreichen der für Winterreifen zulässigen Mindestprofiltiefe wird durch die sich kontinuierlich verringernde Amplitude der Wellenform im zweiten Abschnitt und durch den an diesen Abschnitt anschließenden unstrukturierten Endabschnitt der Laufstreifen zunehmend weicher. Auf diese Weise können sowohl die Winter- als auch die Trockenfahreigenschaften des Reifens über die Lebensdauer des Reifens aufeinander gut abgestimmt werden.

Für eine optimale Abstimmung und ein vergleichsweise gleich gutes Niveau der Winter- und der Trockenfahreigenschaften des Reifens sind bestimmte Anordnungen der radialen Abschnitte der Einschnitte von besonderem Vorteil. So sollte beispielsweise der Winkel, den der erste Abschnitt mit der radialen Richtung einschließt, zwischen 20° und 50° betragen. Der zweite Abschnitt, welcher gegensinnig zum ersten Abschnitt in radialer Richtung geneigt ist, sollte zur radialen Richtung einen Winkel einschließen, der ebenfalls zwischen 20° und 50° beträgt. Je nach der radialen Erstreckung des ersten und des zweiten Abschnittes kann es auch günstig sein, wenn diese Winkel übereinstimmend groß gewählt werden, insbesondere in der Größenordnung von 35°.

Für eine optimale Versteifung des Laufstreifens bei noch neuem Reifen ist es von Vorteil, wenn der erste Abschnitt bis auf eine Tiefe reicht, die zwischen 15% und 30% der Profiltiefe beträgt. Nach einem Abrieb des Laufstreifens bis unterhalb des ersten Abschnittes sollten die Einschnitte eine geringere Versteifung bewirken. Daher ist es günstig, wenn der zweite Abschnitt bis auf eine Tiefe reicht, die zwischen 65% und 80% der Profiltiefe beträgt.

Um einen gleichmäßigen Abrieb über die Lebensdauer des Reifens zu gewährleisten, ist es von Vorteil, wenn die Knickbereiche gerundet ausgeführt werden.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Schrägansicht eines Profilelementes eines Laufstreifens eines Fahrzeugluftreifens mit einer Ausführungsvariante der Erfindung,
Fig. 2 eine Schrägansicht eines Lamellenbleches zur Herstellung von in Fig. 1 gezeigten Einschnitten,
Fig. 3 eine Frontansicht des Lamellenbleches aus Fig. 2 und
Fig. 4 eine Draufsicht des Lamellenbleches aus Fig. 2.

Die Erfindung befasst sich mit einer besonderen Ausführung von Einschnitten in Profilelementen von Laufstreifen, wie Profilblöcke oder Profilrippen, in Fahrzeugluftreifen, insbesondere Winterreifen für Personenkraftwagen.

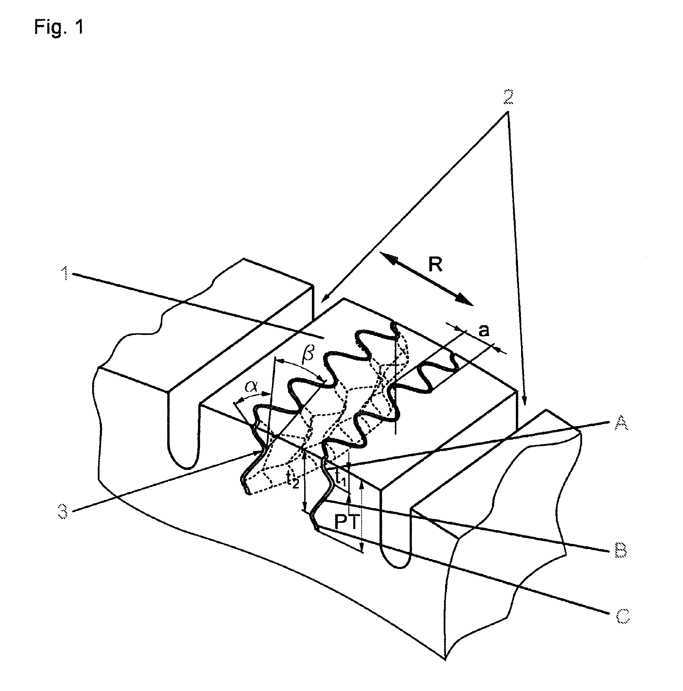

Fig. 1 zeigt beispielhaft ein Profilelement für einen Laufstreifen in der Form eines Profilblockes 1, welcher in Umfangsrichtung, die durch den Doppelpfeil R angedeutet ist, von Quernuten 2 begrenzt ist, an welche weitere Profilblöcke 1 anschließen. Die Profilblöcke 1 bilden somit eine in Umfangsrichtung umlaufende Profilblockreihe, die von weiteren Profilblockreihen oder Profilrippen des Laufstreifens durch Umfangsnuten getrennt sind. Der in Fig. 1 gezeigte Profilblock 1 weist im Wesentlichen in Querrichtung des Laufstreifens verlaufende Einschnitte 3 auf, die den Profilblock 1 komplett durchqueren. Die beiden übereinstimmend ausgeführten Einschnitte 3 weisen in Draufsicht und an der Profiloberfläche eine Wellenform auf, deren für den gesamten Einschnitt 3 konstante Amplitude a zwischen 2 mm und 7 mm gewählt wird. Die die Einschnitte 3 begrenzenden Einschnittwände im Profilblock 1 sind übereinstimmend ausgeführt. Die Einschnittbreite, die ebenfalls für den gesamten Einschnitt 3 konstant ist, wird zwischen 0,4 mm und 0,6 mm gewählt.

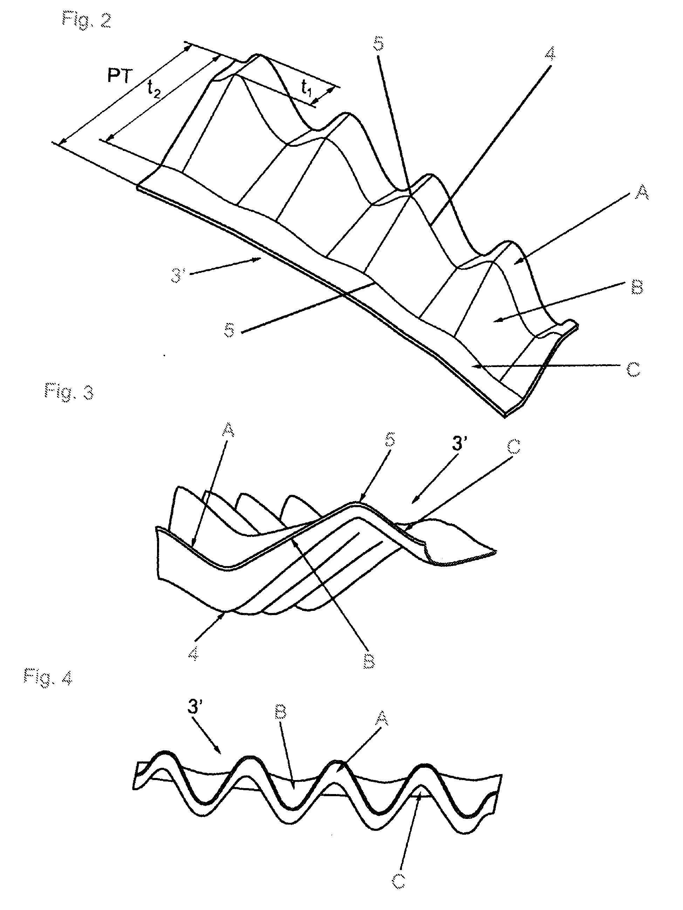

Die Figuren 2 bis 4 zeigen Ansichten eines Lamellenbleches 3', welches zur Herstellung von Einschnitten 3 gemäß Fig. 1 geeignet ist und auf nicht gezeigte und bekannte Weise in einer Reifenvulkanisationsform verankert wird, wobei der zur Verankerung vorgesehene Bestandteil des Lamellenbleches 3' nicht dargestellt ist. In der nun folgenden Beschreibung wird ausschließlich auf die Ausgestaltung des Einschnittes 3 Bezug genommen, wobei jedoch übereinstimmende Bezugsziffern und Bezeichnungen für die dargestellten Ansichten des Lamellenbleches 3' verwendet werden, da dieses die Einschnittwände als Abbild formt.

Jeder Einschnitt 3 weist ausgehend von der Laufstreifenperipherie einen Abschnitt A auf, welcher unter einem spitzen Winkel α, welcher bei der dargestellten Ausführungsvariante etwa 35° beträgt und zwischen 20° und 50° gewählt wird, zur radialen Richtung verläuft. Der Abschnitt A reicht bis auf eine Tiefe t₁, die zwischen 15 % und 30 % der Profiltiefe PT, vorzugsweise etwa 25 % der Profiltiefe PT, beträgt. Innerhalb des Abschnittes A wird die an der Laufstreifenperipherie vorliegende Wellenform unverändert, demnach mit gleichbleibender Amplitude und gleichbleibender Wellenlänge, bis auf die Tiefe t₁ fortgesetzt. Ein in axialer Richtung den Einschnitt 3 komplett durchquerender, gerundet ausgeführter Knickbereich 4 bildet den Übergang zu einem zweiten Abschnitt B, welcher in radialer Richtung bis auf eine Tiefe t₂ reicht, die zwischen 65 % und 80 % der Profiltiefe PT, insbesondere etwa 75 % der Profiltiefe PT, beträgt. Im Abschnitt B verringert sich die Amplitude a der Wellenform in radialer Richtung kontinuierlich, derart, dass am radial inneren Ende des Abschnittes B keine Wellenform mehr gegeben ist. Der Abschnitt B erstreckt sich jedoch nicht exakt in radialer Richtung, sondern gegensinnig zur Neigung des Abschnittes A unter einem Winkel β zur radialen Richtung, welcher zwischen 20° und 50° gewählt wird und insbesondere etwa 35° beträgt. Der Winkel β wird ebenso wie der Winkel α entlang der radialen Erstreckung der Wellenberge bzw. Wellentäler der Wellenform des Einschnittes 3 ermittelt. Dem Abschnitt B schließt als letzter Abschnitt im Inneren des Profilblockes 1 ein Endabschnitt C an, in welchem die Einschnittwände nicht strukturiert sind und insbesondere geradlinig oder entlang eines leichten Bogens verlaufen. Der Endabschnitt C verläuft in radialer Richtung über 20 % bis 35 % der radialen Erstreckung des Einschnittes 3. Ein gerundet ausgeführter und in axialer Richtung verlaufender Knickbereich 5 trennt den Endabschnitt C vom Abschnitt B.

Erfindungsgemäß ausgeführte Einschnitte werden bevorzugt in einer Anzahl von zwei bis fünf Einschnitten pro Profilblock angeordnet. Sie werden insbesondere im Wesentlichen in Profilquerrichtung orientiert.

Die Erfindung ist auf das dargestellte Ausführungsbeispiel nicht eingeschränkt. Es ist beispielsweise möglich, erfindungsgemäß ausgeführte Einschnitte abschnittsweise mit einer geringeren Tiefe auszuführen. Des Weiteren ist es möglich, dass die Einschnitte nur über einen Teilbereich des Profilelementes verlaufen und somit innerhalb des Profilelementes enden.

### Bezugszeichenliste

- 1: Profilblock
- 2: Quernut
- 3: Einschnitt
- 4: Knick
- 5: Knickbereich
- a: Amplitude
- A: Abschnitt
- B: Abschnitt
- C: Endabschnitt
- v: Winkel
- β: Winkel
- PT: Profiltiefe
- t₁: Tiefe, 15 % bis 30 % PT
- t₂: Tiefe, 65 % bis 80 % PT

## Patentansprüche

1. Fahrzeugluftreifen mit einem Laufstreifen, welcher sich aus Profilelementen (1), wie Profilblöcken oder Profilrippen, zusammensetzt, welche jeweils mit zumindest einem Einschnitt (3) versehen sind, welcher sich in radialer Richtung ins Profilelementinnere erstreckt und welcher Einschnittwände mit korrespondierenden Abschnitten (A, B) mit einer Wellenform aufweist, **dadurch gekennzeichnet,**
**dass** der Einschnitt (3), von der Laufstreifenperipherie aus betrachtet, einen ersten Einschnittabschnitt (A) aufweist, in welchem die bereits an der Laufstreifenperipherie gegebene Wellenform beibehalten ist, welcher jedoch unter einem spitzen Winkel (α) zur radialen Richtung geneigt verläuft, wobei an diesen Abschnitt (A) über einen in axialer Richtung verlaufenden Knickbereich (4) ein zweiter Einschnittabschnitt (B) anschließt, in welchem die Amplitude der Wellenform in radialer Richtung kontinuierlich geringer wird und am radialen inneren Ende des Abschnittes (B) auf Null verringert ist, welcher Abschnitt (B) gegenüber der radialen Richtung gegensinnig zum ersten Abschnitt (A) unter einem spitzen Winkel (β) geneigt verläuft, wobei an diesen Abschnitt (B) über einen weiteren in axialer Richtung verlaufenden Knickbereich (5) ein Endabschnitt (C) anschließt, welcher sich in radialer Richtung erstreckt und unstrukturiert ausgeführt ist.

2. Fahrzeugluftreifen nach Anspruch 1, **dadurch gekennzeichnet, dass** der Winkel (α), den der erste Abschnitt (A) mit der radialen Richtung einschließt, zwischen 20° und 50° beträgt.

3. Fahrzeugluftreifen nach Anspruch 1 oder 2, **dadurch gekennzeichnet, dass** der Winkel (β), den der zweite Abschnitt (B) mit der radialen Richtung einschließt, zwischen 20° und 50° beträgt.

4. Fahrzeugluftreifen nach Anspruch 1 oder 2, **dadurch gekennzeichnet, dass** der erste Abschnitt (A) bis auf eine Tiefe (t₁) reicht, die zwischen 15 % und 30 % der Profiltiefe (PT) beträgt.

5. Fahrzeugluftreifen nach Anspruch 1 oder 3, **dadurch gekennzeichnet, dass** der zweite Abschnitt (B) bis auf eine Tiefe (t₂) reicht, die zwischen 65 % und 80 % der Profiltiefe (PT) beträgt.

6. Fahrzeugluftreifen nach einem der Ansprüche 1 bis 5, **dadurch gekennzeichnet, dass** die Knickbereiche (4, 5) gerundet ausgeführt sind.

## Claims

1. Pneumatic vehicle tyre with a tread rubber, which is made up of profile elements (1), such as tread bars or tread ribs, which are respectively provided with at least one sipe (3), which extends in a radial direction into the interior of the profile elements and which has sipe walls comprising corresponding portions (A, B) with a wave form, **characterized in that**, when considered from the periphery of the tread rubber, the sipe (3) has a first sipe portion (A), in which the wave form already provided at the periphery of the tread rubber is retained but which slopes at an acute angle (α) to the radial direction, this portion (A) being adjoined via a region of inflection (4) extending in the axial direction by a second sipe portion (B), in which the amplitude of the wave form becomes continuously smaller in the radial direction and is reduced to zero at the inner radial end of the portion (B), which portion (B) slopes at an acute angle (β) to the radial direction in a direction opposite to the first portion (A), this portion (B) being adjoined via a further region of inflection (5) extending in the axial direction by an end portion (C), which is configured such that it extends in the radial direction and is unstructured.

2. Pneumatic vehicle tyre according to Claim 1, **characterized in that** the angle (α) which the first portion (A) forms with the radial direction is between 20° and 50°.

3. Pneumatic vehicle tyre according to Claim 1 or 2, **characterized in that** the angle (β) which the second portion (B) forms with the radial direction is between 20° and 50°.

4. Pneumatic vehicle tyre according to Claim 1 or 2, **characterized in that** the first portion (A) reaches to a depth (t₁) which is between 15% and 30% of the profile depth (PT).

5. Pneumatic vehicle tyre according to Claim 1 or 3, **characterized in that** the second portion (B) reaches to a depth (t₂) which is between 65% and 80% of the profile depth (PT).

6. Pneumatic vehicle tyre according to one of Claims 1 to 5, **characterized in that** the regions of inflection (4, 5) are of a rounded configuration.

## Revendications

1. Bandage pneumatique pour roue de véhicule, doté d'une bande de roulement constituée de l'assemblage d'éléments profilés (1), par exemple des blocs profilés ou des nervures profilées, dotés d'au moins une entaille (3) qui s'étend dans la direction radiale à l'intérieur de l'élément profilé et dont les parois sont dotées de segments (A, B) correspondants de forme ondulée,
**caractérisé en ce que**
vue depuis la périphérie de la bande de roulement, l'entaille (3) présente un premier segment d'entaille (A) dans lequel la forme ondulée déjà donnée à la périphérie de la bande de roulement est conservée mais qui s'étend obliquement sous un angle aigu (α) par rapport à la direction radiale, un deuxième segment d'entaille (B) dans lequel l'amplitude de la forme ondulée diminue progressivement dans la direction radiale et se réduit à zéro à l'extrémité radiale intérieure du segment (B) qui se raccorde à ce segment (A) par l'intermédiaire d'une partie courbe (4) qui s'étend dans la direction axiale, le segment (B) s'étendant obliquement sous un angle aigu (β) par rapport à la direction radiale dans le sens opposé au premier segment (A), un segment d'extrémité (C) qui s'étend dans la direction radiale et qui n'est pas structuré se raccordant à ce segment (B) par une autre partie courbe (5) qui s'étend dans la direction axiale.

2. Bandage pneumatique pour roue de véhicule selon la revendication 1, **caractérisé en ce que** l'angle (α) formé entre le premier segment (A) et la direction radiale est compris entre 20° et 50°.

3. Bandage pneumatique pour roue de véhicule selon les revendications 1 ou 2, **caractérisé en ce que** l'angle (β) formé entre le deuxième segment (B) et la direction radiale est compris entre 20° et 50°.

4. Bandage pneumatique pour roue de véhicule selon les revendications 1 ou 2, **caractérisé en ce que** le premier segment (A) s'étend sur une profondeur (t₁) qui représente entre 15 % et 30 % de la profondeur (PT) du profilé.

5. Bandage pneumatique pour roue de véhicule selon les revendications 1 ou 3, **caractérisé en ce que** le deuxième segment (B) s'étend sur une profondeur (t₂) qui représente entre 65 % et 80 % de la profondeur (PT) du profilé.

6. Bandage pneumatique pour roue de véhicule selon l'une des revendications 1 à 5, **caractérisé en ce que** les parties courbes (4, 5) sont arrondies.
